# EUROPEAN PATENT APPLICATION

(11) **EP 4 717 852 A1**
(43) Date of publication of application: **01.04.2026**
(21) Application number: 24814386.9
(22) Date of filing: 27.05.2024
(51) Int. Cl.: E04H 6/02, E04H 6/08

(54) **CAR WASH SUITABLE FOR UNDERGROUND GARAGE**

(30) Priority: 29.05.2023 CN 202321323198 U
(71) Applicant: Beijing Moguiyo Tech Co Ltd, Beijing 101117 (CN)
(72) Inventor: E, Wenxuan, Beijing 101117 (CN)
(74) Representative: Icosa
(86) International application number: PCT/CN2024/095507
(87) International publication number: WO 2024/245189

(57) **Abstract**

The present application relates to a car wash suitable for an underground garage, the car wash comprising a cuboid body established based on a plurality of straight parking spots in the underground garage, wherein the inside of the body is provided with an entrance barrier, an exit barrier, and a vehicle cleaning space which is enclosed by two partitions and connects the entrance barrier to the exit barrier; and two diagonally-arranged and parallel tracks for movement of a cleaning machine are installed in the body, a vehicle is parked between the two tracks, the acute angle formed between the tracks and traffic lanes at the entrance and exit of the vehicle cleaning space being 60-90 degrees. In the present application, by taking into consideration the characteristics of low-ceilinged spaces and narrow traffic lanes in the underground garage, the vehicle cleaning space is arranged diagonally, thereby adapting to a wider range of vehicle types within the same usage area. Moreover, by means of an entrance passage with a guiding function, it is more convenient for a user's vehicle to enter. Thus, the present application has strong universal applicability, and is suitable for large-scale deployment of an underground car wash in the unmanned mode.

## Description

### TECHNICAL FIELD

The present application relates to the technical field of vehicle cleaning, and in particular to a vehicle wash facility adaptable to an underground garage.

### BACKGROUND

With the increasing shortage of urban land resources and the influence of pollution and noise which is easily generated in the vehicle wash facility industry itself, at present, the vehicle wash facility tends to be provided in an underground garage of a shopping mall, an office building and a residential building. The traditional vehicle wash facility located in the underground garage is generally built at the corner or next to the wall, and adopts a manual washing method or a semi-manual washing method. With this type of vehicle wash facility, a vehicle generally enters and exits in the same direction. In this case, the vehicle enters the vehicle wash facility normally, while the vehicle needs to be reversed when exiting the vehicle wash facility, or the vehicle needs to be reversed when entering the vehicle wash facility. Obviously, the vehicle wash facility with such a design structure is not conducive to the automatic washing of a machine in an unattended mode and user experience. Especially for a one-way carriageway in the underground garage, it is more difficult to turn the vehicle directly into the vehicle wash facility in a direction of the front of the vehicle. It is a preferred solution in the unattended mode that a plurality of parking spots are used to build a vehicle wash facility provided with a unidirectional entrance and a unidirectional exit. At present, a width and a length of a straight parking spot in the underground garage are usually 2.2-2.5 meters × 5-5.5 meters (i.e. the width is 2.2-2.5 meters and the length is 5-5.5 meters). Further, there are many pillar network structures in the underground garage. According to the bearing strength of the building, the most economical clear distance between the pillars is generally set to about 7.5 meters. In this way, each side of three parking spots adjacent to each other in a width direction is fixedly provided with a pillar, and each side of two parking spots adjacent to each other in a length direction is also provided with a pillar. As such, 3 × 2 parking spots (totally 6 parking spots arranged in two rows, that is, 6 parking spots arranged in a 3 × 2 array) have become a relatively common design at present. Therefore, for the 3 × 2 parking spots adjacent to each other, a pillar will be provided at each of four corners of the cuboid. Since the length of the parking spot is greater than 7.5 meters, an additional pillar will be provided in the middle of the parking spots in the length direction. Based on the actual height restriction of the underground garage (the general height of the underground garage is about 2.5 meters), the traditional gantry structure mode is usually not applicable in the underground garage. It is a preferred selection to perform a side washing with sliding tracks. However, the length of the cars varies, most of the cars have a length of about 4.6 meters, and the longest vehicle can have a length of 5.5 meters. In order to meet the requirements of versatility, the length of the track should be greater than the maximum length of a normal vehicle, so that the front and rear of the vehicle can be scanned and washed. The experiment proves that the suitable length of the track is about 7.5 meters. Further, an entrance space where the vehicle is located before entering the washing space should have a certain depth to allow the front of the vehicle to turn in. For the carriageway, it has been calculated that if it is desired to directly drive the vehicle from the front of the vehicle into the washing space, it is necessary to preserve at least a certain depth and turning radius. The wider and deeper the entrance space, the more convenient it is for the user to enter. If the user wants to directly enter from the one-way carriageway and park the vehicle straightly, it is calculated that the minimum depth of the entrance is about 3.9 meters, and the minimum width (limited by the maximum turning radius) is about 4.11 meters. Obviously, under the premise of 3 × 2 parking spots, the excessive depth and width of the entrance affects the subsequent layout of the washing machine. For the arrangement of the machine, it is necessary to consider the length of the track. The tracks need to meet the versatility of the length of different cars. For the width between the tracks, it is necessary to consider the eccentricity of the machine. The wider the width between the tracks, the higher the eccentric design requirements, and the more difficult the deployment of the machine. Under the premise of considering the economic cost, combined with the pillar network environment in the underground garage, a technical problem that needs to be solved at present is: how to use the effective parking spot area to design an unattended vehicle wash facility adaptable to the underground garage environment, so that the users can turn into the washing area more conveniently to wash the cars, and the vehicle wash facility has strong versatility to meet the washing of different types of cars.

### SUMMARY

An objective of the present application is to provide a vehicle wash facility which is convenient for the users to enter and exit the washing space and has strong versatility.

A vehicle wash facility adaptable to an underground garage according to this embodiment includes a body built based on a plurality of straight parking spots adjacent to each other in the underground garage. A washing space is provided in the body. The washing space is defined by an entrance barrier, an exit barrier, and two partitions for connecting the entrance barrier to the exit barrier. Two tracks are fixedly mounted in the body. The two tracks are arranged obliquely and arranged parallel to each other and are configured for moving a washing machine. A vehicle is configured to be parked on a platform between the two tracks. An acute angle formed between each of the two tracks and a carriageway at each of an entrance and an exit of the washing space is from 60 degrees to 90 degrees.

Further, the two partitions are arranged obliquely and arranged parallel to each other, and the entrance barrier and the exit barrier are arranged obliquely and arranged parallel to each other, to present a parallelogram cross section of the washing space.

Further, each of the two tracks is located on the ground between the two partitions, or is fixed on a respective one of the two partitions, or is hoisted on a top portion of the washing space between the two partitions. The acute angle formed between each of the two tracks and the carriageway at each of the entrance and the exit of the washing space is from 70 degrees to 80 degrees.

Further, the washing space is obliquely arranged in a diagonal direction of the body. The body is a cuboid built based on the plurality of straight parking spots arranged in a 3 × 2 array, and each of four corners of the body is located at a respective one of four supporting pillars.

Further, the body includes a front external facade, a rear external facade, a left external facade and a right external facade. The entrance barrier of the washing space faces the front external facade, and the exit barrier of the washing space faces the rear external facade. At least one storage room is defined by the two partitions, the front external facade, the rear external facade, the left external facade and the right external facade.

Further, the body further includes at least one of an entrance passage configured for guiding the vehicle into the washing space and an exit passage configured for guiding the vehicle out of the washing space.

Further, a depth of the entrance passage is from 2 meters to 3 meters, a depth of the exit passage is from 0 to 1 meter, and at least one of the entrance passage and the exit passage is an open space or is formed by solid physical surfaces.

Further, the entrance passage is provided with two solid internal facades extending toward an entrance door.

One of the two internal facades by which the vehicle first passes when travelling along the carriageway of the underground garage is an inclined flat surface, and an angle formed between the inclined flat surface and a first opening of the body is less than 90 degrees.

Or, one of the two internal facades by which the vehicle first passes when travelling along the carriageway of the underground garage is a curved surface, if said one of the two internal facades is a curved surface, an angle formed between a tangent plane of the curved surface and a first opening of the body is less than 90 degrees.

Further, two elongated limit levers parallel to each other are fixed on the ground between the two tracks, or limit marking lines or a limit marking plane are/is drawn on the ground between the two tracks.

Further, each of the two partitions is made of a waterproof sealing material and includes one or more of a solid wall, a waterproof wooden board, a waterproof plastic board, a waterproof glass board or combinations thereof. A distance between the two tracks is from 2.2 meters to 3.8 meters. The entrance barrier is an electric rolling shutter or an electric barrier gate.

Further, the entrance passage is provided with a first opening facing the carriageway of the underground garage, and the entrance passage is gradually narrowed from the first opening of the body to an entrance door. The exit passage is provided with a second opening facing the carriageway of the underground garage, and the exit passage is gradually widened from an exit door to the second opening of the body.

By adopting the vehicle wash facility adaptable to the underground garage of the present application, the technical effects are achieved as follows.
1. With the vehicle wash facility of the present application, based on the characteristics of the narrow carriageway of the underground garage, the plurality of straight parking spots arranged side-by-side, and the pillar network restrictions, a vehicle wash facility provided with a parking space arranged obliquely is formed in the space defined by the plurality of parking spots. After the user's vehicle passed from the entrance passage by scanning the QR code to pay, the vehicle can enter the washing space in the vehicle wash facility, and an entire set of washing and drying processes are performed on the vehicle by the robot, and then the vehicle exits from the exit passage. The entire process is simple and has a strong implementation, and the user experience is high.
2. Considering the length of the track of machine for washing the cars, different lengths of different cars, the length of the entrance passage and the exit passage, and the length of the parking spot, in the present application, a plurality of standard straight parking spots adjacent to each other are adopted to build an unattended automatic vehicle wash facility, and the washing space is arranged obliquely, that is, the washing space is arranged diagonally in the body, so that the length of the track is large enough, and the versatility is strong. Thus, the vehicle wash facility can meet the washing requirements of cars with different lengths and widths in the existing market.
3. In the vehicle wash facility of the present application, an angle formed between one of the internal facades of the entrance passage and its adjacent first opening of the body is designed to be less than 90 degrees, so that the steering wheel angle at which the vehicle is turned into the entrance passage from the carriageway arranged adjacent to said internal facade (perpendicular to the direction of the parking spot) is less than 90 degrees. In this way, even when travelling along the one-way carriageway in the underground garage, the user can turn the vehicle into the entrance passage once or conveniently without multiple adjustments, so that the user experience is greatly enhanced.
4. With the oblique design of the entrance passage of the present application, the user can have sufficient large adjustment space after turning the vehicle into the entrance passage, and the entrance passage has a sufficient depth. The entrance passage is gradually narrowed from the outer side to the inner side of the body, which facilitates the formation of an entry line for physically guiding the user, and facilitates guiding the user to park the vehicle in the middle position of the vehicle washing area. The exit passage is gradually widened from the inner side to the outer side of the body, so that the field of view is wide enough when the vehicle exits, which is convenient for the user to observe the road conditions in the forward carriageway, and the rear of the vehicle is not easily collided when the user is turning the vehicle.
5. In the present application, the elongated limit levers or limit areas visible to the naked eye are provided between the two tracks in the washing space, so as to further limit the distance between the vehicle and the washing equipment on the left and right tracks, thereby improving the safety of unmanned washing.

### BRIEF DESCRIPTION OF THE DRAWINGS

FIG. 1 is a schematic diagram of parking spots based on which a vehicle wash facility according to this embodiment is built.
FIG. 2 is a schematic top view of a vehicle wash facility adaptable to an underground garage according to this embodiment.
FIG. 3 is a schematic stereoscopic diagram of a vehicle wash facility adaptable to an underground garage according to this embodiment.
FIG. 4 is another schematic diagram of a vehicle wash facility according to this embodiment.
FIG. 5 is another schematic diagram of a vehicle wash facility according to this embodiment.
FIG. 6 (a) is another schematic diagram of a vehicle wash facility according to this embodiment.
FIG. 6 (b) is another schematic diagram of a vehicle wash facility according to this embodiment.
FIG. 7 is another schematic diagram of a vehicle wash facility according to this embodiment.
FIG. 8 is a schematic diagram of an angle of a curved surface of a vehicle wash facility shown in FIG. 7.

### DETAILED DESCRIPTION

In order to make the objectives, technical solutions and advantages of the present application more apparent, hereinafter, the present application will be described in detail in connection with the accompanying drawings and embodiments. It should be understood that the specific embodiments described here are merely used to explain the present application, and are not intended to limit the present application.

It should be noted that the drawings provided by this embodiment merely illustrate the basic concept of the present application in a schematic manner.

The structures, proportions, sizes illustrated in the drawings attached to this specification are only used to match the contents disclosed in the specification, so as to be understood and read by those familiar with this technology, and are not used to limit the limiting conditions that the present application can implement. Any modification of structure, change of proportional relationship or adjustment of size, without affecting the efficacy and purpose that the present application can produce, should still fall within the scope of the technical content disclosed by the present application.

In this specification, the terminologies of "front", "rear", "left", "right", "middle", "longitudinal", "transversal", "horizontal", "inner", "outer" and the like that indicate relations of directions or positions are based on the relations of directions or positions shown in the drawings, which are only to facilitate to simplify the description, rather than to indicate or imply that the referred device or element is limited to the specific direction or to be operated or configured in the specific direction. Therefore, the above-mentioned terminologies shall not be interpreted as confine to the present application. In addition, terms "first" and "second" are only adopted for description and should not be understood to indicate or imply relative importance.

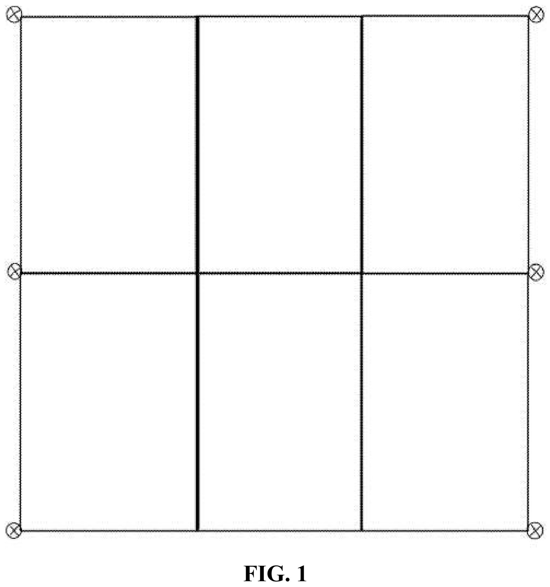

This embodiment provides a vehicle wash facility adaptable to an underground garage. This vehicle wash facility is mainly adaptable to low spaces, such as the underground garage. To build a vehicle wash facility in the underground garage, it is necessary to comprehensively consider various factors, such as the height of the underground garage, the pillar network structure, the size of the parking spot, convenience of entrance and exit of vehicle, water proof and noise proof, washing machine space, equipment storage room space, length, width and height of different cars. As shown in FIG. 1, in the present application, based on the versatility characteristics of the existing standard straight parking spots in the underground garage, six straight parking spots arranged in two rows and adjacent to each other are adopted to build a vehicle wash facility with a cuboid structure in the present application, in which each of the four corners of the cuboid body is located at a respective one of the four pillars of the underground garage. The vehicle wash facility in the present application belongs to a vehicle wash facility for machine intelligent washing in an unattended mode. When the user is driving along the carriageway of the underground garage, the arrow shown in the figure indicates the driving direction of the vehicle, and the user can easily turn the vehicle directly into the entrance space in front of the washing space. After scanning the QR code to pay or verifying the coupons, the entrance barrier at the washing entrance is opened, and the vehicle enters the washing space of the vehicle wash facility, and then the vehicle is stalled and stood still. Image sensors and radar start scanning modeling of vehicle models to generate the vehicle washing paths. Then washing instructions are sent to the washing robot on the tracks, and then the robot completes the automated process of spraying chemicals, rinsing with high pressure water and air drying according to the instructions. Finally, the exit barrier at the exit is automatically opened, and the vehicle exits directly from the other side. The whole washing process is controlled in 6-9 minutes, which greatly reduces the waiting time of the users.

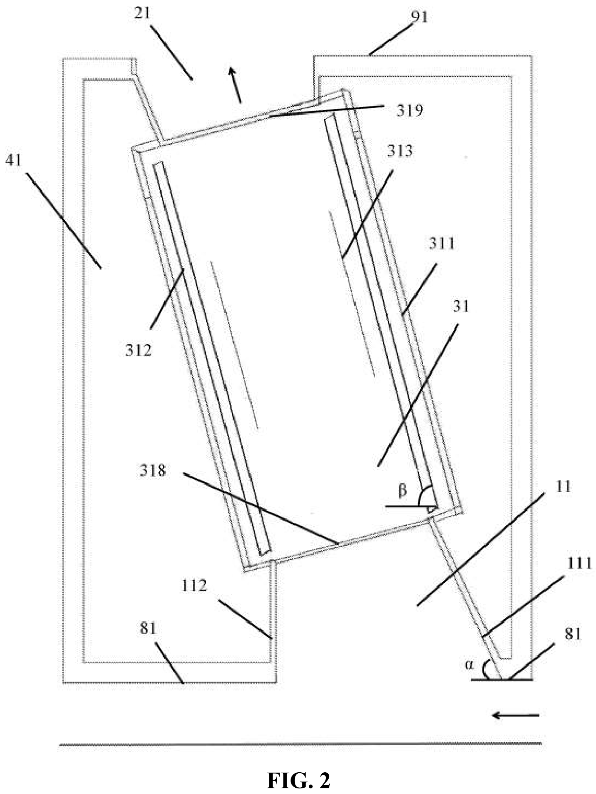

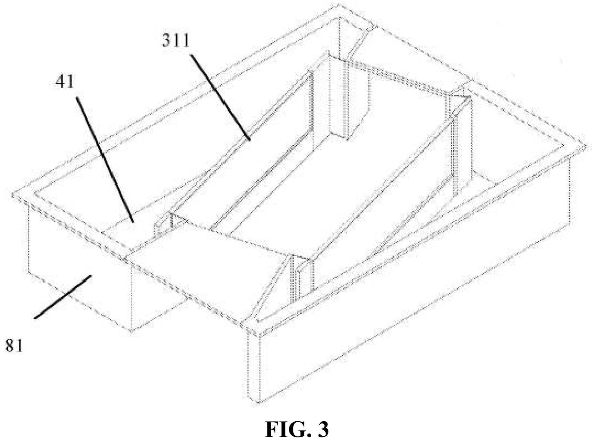

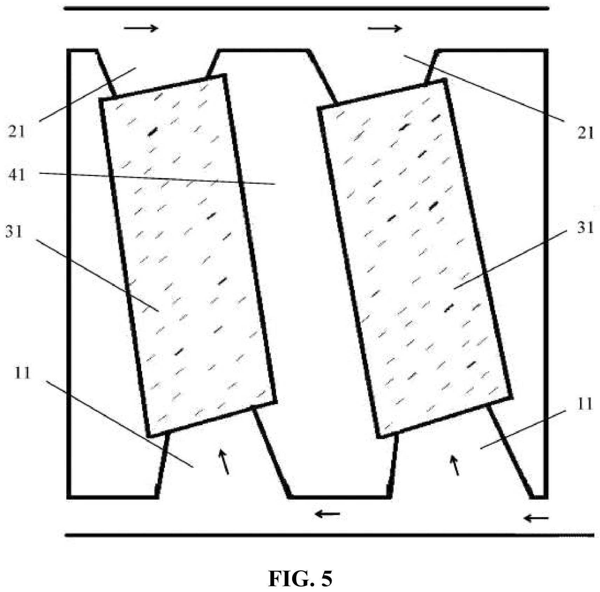

As shown in FIG. 2 and FIG. 3, the vehicle wash facility in this embodiment includes a body with a cuboid structure formed by 3 × 2 parking spots adjacent to each other. The body is provided with a front external facade 81, a rear external facade 91, a left external facade and a right external facade, and the outer sides of the body are closed. A carriageway is located outside each of the front external facade 81 and the rear external facade 91. The edges of the body coincide with the outer side of the lines of the parking spot adjacent to each other. The width of the body (in a direction of the carriageway) is a sum of the widths of three parking spots, the length of the body is a sum of the lengths of two parking spots, and the height of the body is determined based on the height of the underground garage. The length, the width and the height of the body can be adjusted according to actual needs. For example, as shown in FIG. 5, when it is desired to build a vehicle wash facility capable of simultaneously washing two cars, two separate washing spaces 31 and two separate entrance passages 11 and two separate exit passages 21 are provided in one integrated vehicle wash facility. In this case, the length and the height of the body remain unchanged, and the width of the body is increased, for example to 10-15 meters, so that the two cars can be simultaneously washed, and the two washing spaces 31 can share the same equipment room in the middle portion. The body in this embodiment includes a washing space 31 located inside, and a top portion of the washing space 31 may be open or closed.

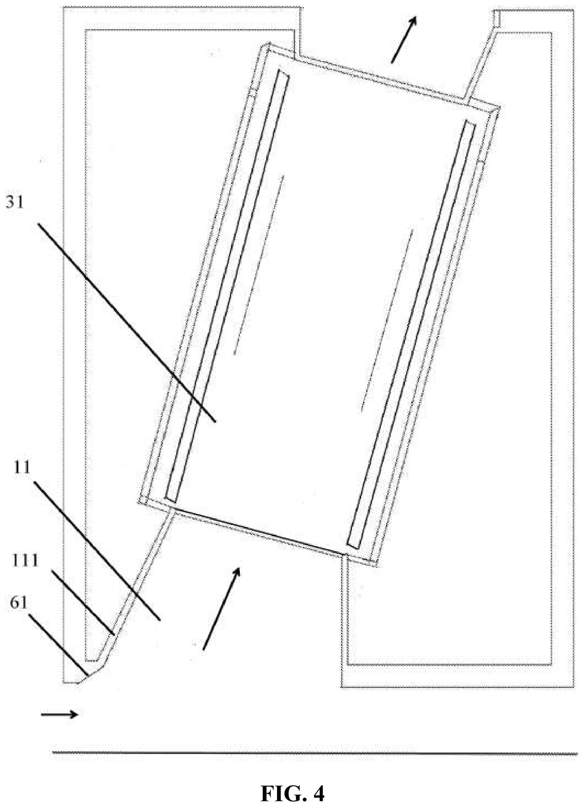

As shown in FIG. 2 and FIG. 3, in this embodiment, a washing space 31 is built in the cuboid body, which is obliquely arranged and is formed by an entrance barrier 318, an exit barrier 319, and two partitions 312 for connecting the entrance barrier 318 to the exit barrier 319. Each of the two partitions 311 is made of a waterproof sealing material or a water absorbent material, and includes one or more of a solid wall, a waterproof wooden board, a waterproof plastic board, a waterproof glass board or combinations thereof, or adopts a water absorbent fabric. Each of the entrance barrier 318 and the exit barrier 319 can be an electric rolling shutter or electric barrier gate controlled by a program. Since a large amount of moisture and noise will be generated in the space during washing, and in order to take into account the safety factors, a sealing structure in the form of an electric door is preferred. Two tracks 312 are fixedly mounted in the body, the two tracks are arranged obliquely and arranged parallel to each other and are configured for moving a washing machine. Herein, an oblique direction is defined relative to two edges of the straight parking spot. Each of the two tracks 312 is located on the ground between the two partitions 311, or is fixed on a respective one of the two partitions 311, or is hoisted on a top portion of the washing space between the two partitions 311. In view of the effect on the eccentricity of the overall structure due to the need for the machine to slide along the tracks and the limitation of the height of the underground garage, it is preferred to arrange the tracks on a platform on the ground, and the vehicle is configured to be parked on the platform between the two tracks 312. An acute angle β formed between each of the two tracks 312 and a carriageway at each of an entrance and an exit of the washing space 31 is from 60 degrees to 90 degrees. If the inclination is too low, the length of the track and the length of the washing space are reduced, thus, a preferred angle is from 70 degrees to 80 degrees. By setting an oblique angle, on the one hand, it is convenient for the vehicle to enter at a small turning angle; on the other hand, it is also possible to accommodate the cars of different lengths or widths to the maximum extent, so that the versatility is strong. The oblique direction is a direction from the corner of the body by which the vehicle first passes when traveling along the carriageway according to the ground indication lines to the opposite corner of the cuboid. As shown in FIG. 2, when the vehicle enters from right to left along the carriageway below, the oblique direction is oriented from the lower right corner to the upper left corner. As shown in FIG. 4, when the vehicle enters from left to right along the carriageway below, the oblique direction is oriented from the lower left corner to the upper right corner. At least one independent equipment room 41 for storage is formed by the two partitions 311, the front external facade 81, the rear external facade 91, the left external facade and the right external facade. The equipment room 41 belongs to the body space outside the washing space 31. The equipment room 41 is mainly configured to place some high-pressure water tanks, chemical dispensing cabinets or other raw materials, which are used for washing the machines and equipment on each side. There may be one or two equipment room(s) 41.

Further, the two partitions 311 are arranged vertically on the ground, arranged obliquely to the parking spot line and arranged parallel to each other, and the entrance barrier 318 and the exit barrier 319 are arranged obliquely and arranged parallel to each other, so as to form an oblique washing space (of which the cross section is a parallelogram) to limit the vehicle in a specific area and in a specific parking direction. Further, the entrance barrier 318 and the exit barrier 319 are arranged perpendicularly to the partition 311, so that the formed cross-section of the washing space is cuboid. Preferably, the washing space 31 is obliquely arranged in a diagonal direction of the cuboid body, which meets the necessary entrance depth and track length and has the maximum use space. It should be noted that the diagonal direction here is an approximate direction. Due to the restrictions of the pillars at the diagonal corners, it is possible to allow the extension line of the track not to intersect the pillar at the corner of cuboid, but leaving a short distance therebetween. The height of the partition 311 is generally equal to the height of each of the left external facade and the right external facade. The design of the partitions 311 is mainly configured to prevent the liquid sprayed by the washing machine on the opposite track 312 from overflowing to the two outer sides, and to achieve the waterproof and soundproof effects. Thus, the partitions 311 are not limited to be linear. For example, the partition 311 is designed to be a deployable and foldable component or in a curved shape with a certain curvature, which can achieve the waterproof and soundproof effects. Since the lengths of the existing cars are different, if the washing space 31 is arranged in the longitudinal direction of the traditional straight parking spots, for some cars with a longer length, such as Lexus LX, Lincoln Navigator, Patrol, etc., it is only possible to reduce the depths of the entrance passage and the exit passage or increase the length of the vehicle wash facility, which will occupy more parking spots or public space and increase the cost. Moreover, the machine needs to slide along the tracks to perform the image collection on the outline of the vehicle, especially the front and rear of the vehicle, and to wash the vehicle, so that the length of the track is generally greater than the length of the vehicle. The length of the track in the present application is from 6.5 meters to 8 meters, preferably from 7 meters to 7.5 meters, which is about 2 meters longer than the longest vehicle (5.5 meters). Therefore, the length of the track itself also limits the length of the entire washing space. The oblique arrangement of the tracks solves this problem. The oblique arrangement of the tracks is not only convenient for users to enter, but also has versatility, which can meet the washing requirements of the cars with different lengths and widths in the market. In addition, the width between the two tracks is designed to be between 2.2 meters and 3.6 meters (based on the external facade), preferably 2.8 meters, which can basically meet the width of general cars in the market. In the present application, by obliquely arranging the washing space 31, the length of the vehicle that can be parked therein is relatively longer in the same usable area, so that the washing space may adapt to more types of cars, and the exit passage and the entrance passage may also be deeper, providing the user's vehicle a certain turning radius to facilitate for the user to enter and exit and having strong versatility, which is adaptable to large-scale deployment of the vehicle wash facility in the underground garage in an unmanned mode.

The distance between the track 312 and the partition 311 is relatively short, and the washing machine on the tracks 312 is provided with a plurality of free arms facing the vehicle. More preferably, two elongated limit levers 313 are further fixed on the ground between the two tracks 312. The two elongated limit levers 313 are arranged opposite to each other and are configured for defining the parking orientation of the vehicle, and the two elongated limit levers 313 are also arranged parallel to each other. The vehicle needs to be parked between the two elongated limit levers 313. The parallel distance between the two elongated limit levers 313 can at least meet the width of most cars or ordinary SUVs, and the elongated limit levers 313 are spaced apart from the tracks 312 on the left and right sides to leave a contactless washing space for the free arms of the robot and reduce the risk of accidental collision. The elongated limit levers 313, the tracks 312, and the partitions 311 are all arranged obliquely and arranged parallel to each other. The elongated limit levers 313 are provided, so that the user can directly sense them through the rearview mirrors or the tires. Another implementation is to draw limit marking lines on the ground between the two tracks 312 to replace the elongated limit levers. The limit marking lines may be marked by a darkened color such as yellow, red or the like. The limit marking lines can form a parallelogram area or can be set only on the left and right sides.

Further, in the present application, a platform higher than the ground of the underground garage may also be provided on the ground in the washing space 31. The platform is provided with a plurality of through holes. The front end of the platform connected to the exit passage and the rear end of the platform connected to the entrance passage are gentle slopes, and the elongated limit levers 313 and the tracks 312 can be mounted on the platform. The waste liquid generated after washing is buffered and stored on the platform or discharged to the sewer after purification.

As a preferred implementation of the present application, the vehicle wash facility further includes an entrance passage 11 configured for guiding the vehicle into the washing space 31. Since the user needs to scan the QR code to pay or verify the payment before driving the vehicle into the vehicle wash facility, the user needs to hold a mobile phone in the driver's seat to operate. Since the front of the vehicle has a certain length, in particular for the one-way carriageway, it is more difficult for the user to directly enter the vehicle wash facility. Thus, an entrance passage 11 with a certain depth is specially designed to accommodate at least the front portion of the vehicle. For the one-way carriageway, the depth of the entrance passage 11 needs to be designed to be at least more than 2 meters, so that the vehicle can be turned in for a better user experience, otherwise the vehicle needs to be adjusted multiple times. In order to be compatible with the characteristics of the one-way carriageway and the length of the track, the depth of the entrance passage is preferably designed to be 2-2.6 meters. If a straight parking area is adopted and the user turns the vehicle into the straight parking area and parks the vehicle straightly, the depth of the entrance space and the turning radius of the vehicle will be increased, which is not adaptable to the parking area formed by the pillar network in the garage scene, and also affects the user's driving experience. A first surface of the entrance passage 11, i.e., the surface of the entrance passage facing the carriageway, is an opening, which is flush with the border line of the carriageway and is relatively wide to facilitate the entry of the vehicle. A second surface of the entrance passage 11 (corresponding to an entrance door of the washing space 31), i.e., the surface of the entrance passage facing the interior of the washing space 31, is relatively narrow, so as to guide the user's vehicle to the central part of the washing space 31, and facilitate the subsequent machine image scanning and washing processes. The second surface of the entrance passage 11 is provided with an electric door controlled by a program, such as an electric rolling shutter, and the surface of the electric rolling shutter may be covered with an adhesive waterproof film. Specifically, in one embodiment, the entrance passage 11 is provided with two internal facades, i.e., a first internal facade 111 and a second internal facade 112, which are arranged opposite to each other and extend along the first opening toward the interior of the body. The internal facade may be a solid wall or panel. For convenience of explanation, in this embodiment, the internal facade by which the vehicle first passes is defined as the first internal facade 111. The advantage of providing the internal facades is to form a relatively obvious physical guidance angle. Depending on different vehicle traveling directions, when this first internal facade 111 is close to the side on which the main driver scans the QR code, the second internal facade 112 is close to the co-driver. Since the parking spot in the underground garage is usually arranged perpendicular to the carriageway, the user for self-service vehicle wash facility needs to drive the vehicle into the vehicle wash facility in a forward direction (rather than in a reverse direction). However, most of the carriageways in the underground garage are one-way carriageways, and it is basically impossible to turn the vehicle directly into a straight parking spot in the direction of the front of the vehicle once. In order to facilitate the user to turn the vehicle into the vehicle wash facility, in the present application, the angle α between one of the internal facades by which the vehicle first passes when travelling along the carriageway (that is, close to the turning side of the vehicle) and the first opening of the entrance passage 11 (perpendicular to the carriageway on the ground) is set to be less than 90 degrees, preferably from 60 degrees to 80 degrees. In this way, an angle formed between this internal facade and its adjacent front external facade 81 of the body is greater than 90 degrees, but should not exceed 130 degrees, preferably from 100 degrees to 120 degrees, so that the steering wheel turning angle at which the vehicle is turned into the entrance passage 11 from the carriageway close to this internal facade is less than 90 degrees. Combined with the oblique angles of the tracks and the washing space, the turning angle by which the user turns the vehicle from the entrance passage 11 into the washing space 31 is small, which greatly reduces the inconvenience for the user to drive in. An angle formed between the corresponding another internal facade, i.e., the second internal facade 112, and its adjacent external facade of the body may be set from 60 degrees to 120 degrees, that is, this angle may be an acute angle, a right angle, or an obtuse angle.

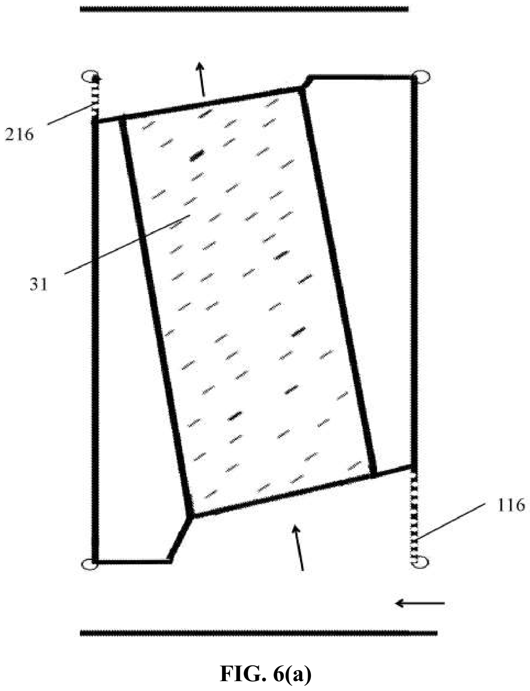

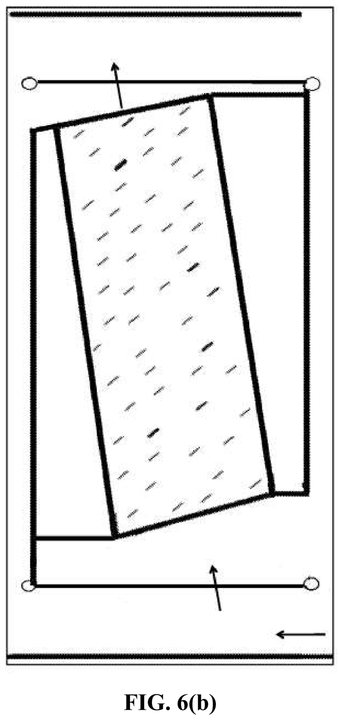

For example, as shown in FIG. 1, the arrow in the figure indicates the travelling direction of the vehicle. When the vehicle travels from right to left along the carriageway and needs to turn right into the vehicle wash facility, the vehicle first passes by the internal facade on the right side. In this case, the first internal facade 111 on the right side is obliquely arranged, and the angle between the first internal facade and the first opening is an acute angle, and the angle between the first internal facade and its adjacent external facade 81 of the body on the right side is an obtuse angle. The internal facade on the left side is the second internal facade 112, on which an electronic display screen may be provided for prompting relevant information and allowing the user to scan the QR code for payment or verify the QR code. As shown in FIG. 3, when the vehicle travels from left to right along the carriageway and needs to turn left into the vehicle wash facility, the internal facade on the left side is obliquely arranged, and the angle between this internal facade and the front external facade 81 of the body on the left side is greater than or equal to 90 degrees, and the electronic display screen is also provided on the first internal facade 111. One preferred solution is that, the angle between the first internal facade 111 and its adjacent front external facade 81 and the angle between the second internal facade 112 and its adjacent front external facade 81 are both set to be greater than 90 degrees, for example about 100 degrees, as shown in FIG. 6. In this way, regardless of whether the carriageway direction is from left to right or from right to left, the user may easily turn the vehicle into the entrance passage 11.

After washing the vehicle in the washing space, the vehicle needs to exit the washing space. If the exit is flush with the rear external facade 91 of the body, it is not convenient for the user to observe the carriageway environment at the exit in advance. Thus, in the present application, the rear external facade 91 of the body is further provided with an exit passage 21 configured for guiding the vehicle out of the washing space 31. The exit passage 21 also has a certain depth, but is relatively small, so as to facilitate the swing of the rear of the vehicle. The exit passage 21 is also provided with a second opening facing the carriageway and a second surface close to the washing space, and the exit passage 21 is gradually widened from the inner side (the second surface) to the outer side (the first surface) of the body, so that the user can observe the carriageway conditions in the front left and front right of the exit when exiting the vehicle wash facility, the field of view is increased, the turning radius of the vehicle is increased, and it it easier to exit the carriageway turning to the outside. An electric door is also provided at the exit passage 21 close to the washing space 31. When the user's vehicle starts being washed in the washing space, the electric doors at the entrance and exit are closed under the control of the system to prevent the liquid from flowing out in the washing process. The oblique arrangement direction of the washing space should be substantially consistent with the oblique direction in which the vehicle enters from the entrance passage, so that the steering wheel adjustment range is small when the vehicle enters the washing space. The entrance passage 11 is provided at a corner close to the front external facade 81, the exit passage 21 is provided at a corner close to the rear external facade 91, and the two corners are arranged diagonally in the cuboid, thereby forming the largest operation space.

In this embodiment, the entrance passage 11 is gradually narrowed from the outer side (the first surface) to the inner side (the second surface), and the end opening (i.e., the second surface) of the entrance passage 11 is located between the width defined by the two partitions 311, and the two internal facades of the entrance passage 11 and the respective partitions 311 on the same side may be parallel to each other or form a certain acute angle. As shown in FIG. 1, if the vehicle travels from right to left, it should be turned right into the vehicle wash facility. In this case, the entrance of the entrance passage 11 is biased toward the right corner of the front external facade, and the angle between the first internal facade 111 on the right side and its adjacent partition 311 is between 10 degrees and 25 degrees.

However, it is undeniable that in the embodiment of the present application, the structure of the entrance passage 11 and the exit passage 21 is not limited to the structure shown in FIG. 1. In an example shown in FIG. 6 (a), there is no obvious physical guiding slope of the entrance passage and the exit passage. Compared with the structure shown in FIG. 1, the entrance space for entering the washing space and the exit space for exiting the washing space are made larger, the internal facades for guiding are discarded, and the walls or shelters between the washing entrance and the first opening, such as a portion of the structural surface 116 in the lower right corner of FIG. 6 (the dashed line in the figure is essentially an open surface without a shelter), are removed. Further, a portion of the walls or shelters between the washing exit and the second opening, such as a portion of the structural surface 216 in the upper left corner of FIG. 6 (the dashed line in the figure is essentially an open surface without a shelter), are removed. In this way, a section from the pillar at the corner to the washing opening is completely open. When the user's vehicle enters, the user can directly see the position of the washing entrance door, thereby facilitating driving the vehicle into the washing space. When the user's vehicle exits from the washing exit, there is no wall or shelter for blocking, so that the field of view is better during exiting. The above design can also meet the requirements of normal entry, washing and normal exit of the cars. Of course, it is undeniable that in the embodiment of the present application, the entrance passage and the exit passage can also be open, that is, there is no physical guiding surface outside the entrance door and the exit door of the washing space, and the whole entrance passage and the exit passage is made as an open surface, as shown in FIG. 6 (b). Compared with the structure shown in FIG. 6 (a), the entrance passage and the exit passage in FIG. 6 (b) do not actually exist, that is, the two internal facades formed by physical structures do not exist, and the whole entrance passage and the exit passage is open. In this case, the entry direction may be defined by drawing the turning indicator lines or using the plastic road cones in the entrance space.

The design of the internal facades can more intuitively guide the user to start turning the steering wheel from a physical perspective, and can increase the storage volume of the equipment room, so that the overall space utilization is higher. The internal facade by which the vehicle first passes when travelling along the carriageway can be an independent inclined flat surface or an irregular surface composed of several inclined (including vertical) flat surfaces, and the angle between each inclined flat surface and the first opening should be an acute angle. In this way, the angle between the overall inclination of the irregular flat surface and the first opening is an acute angle, which is also convenient for user to turn. For example, as shown in FIG. 4, the vehicle travels from left to right and turns into the vehicle wash facility. In this case, an inclined transition section 61 is added between the original first internal facade where the vehicle turns and its adjacent front external facade 81 of the body, so that one original corner becomes two or more corners. The angle between this transition section 61 and its adjacent internal facade and the angle between this transition section 61 and its adjacent front external facade 81 of the body are both greater than 90 degrees, and the addition of the transition section 61 can further reduce the difficulty for the vehicle to turn in and make the turning smoother.

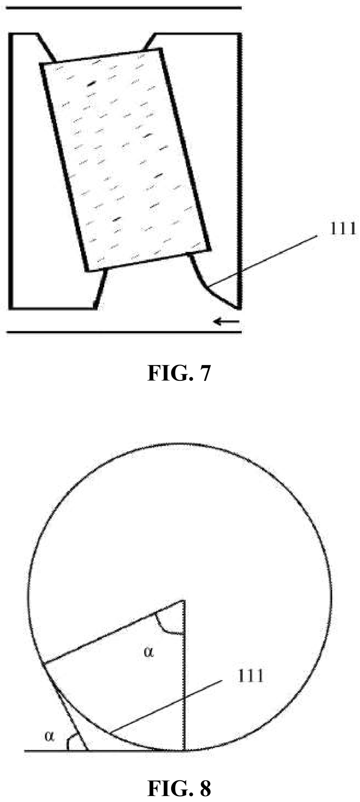

As shown in FIG. 7 and FIG. 8, when the first internal facade is composed of several short and inclined flat surfaces, it can be abstracted into a curved surface. As shown in FIG. 7, the internal facade by which the vehicle first passes when travelling along the carriageway is no longer a flat surface, but a curved surface. As shown in FIG. 8, the arc angle of the curved surface is an acute angle, or the angle between the tangent plane of the curved surface and first opening (equal to the arc angle) is an acute angle. Considering that the entrance passage is generally biased towards the corner of cuboid vehicle wash facility, it is convenient to form an oblique space. Therefore, if the first internal facade is a curved surface, the arc angle can be set from 15 degrees to 35 degrees. Such a structure also allows the vehicle to easily turn in.

Of course, the first internal facade may also adopt a structure in which an inclined flat surface and a curved surface are combined, which will not be described in detail here. In principle, the design of the first internal facade is mainly to facilitate guiding the user's vehicle into the washing space. Therefore, whether the first internal facade is designed as an inclined flat surface or a curved surface with an acute angle with the first opening, or the first internal facade is directly discarded to form an open space and a prominent route guide is drawn in this space area, this requirement can be met.

Compared with the related art, in a vehicle wash facility adaptable to an underground garage in the embodiments of the present application, based on the characteristics of low underground garage and narrow carriageway, the tracks are arranged obliquely in a diagonal direction of the cuboid, so as to form an oblique washing area space and to provide a sufficient large and sufficient deep entrance space for the vehicle to enter the washing space, so that users can easily turn the vehicle directly into the washing space without reversing or adjusting the vehicle multiple times. Further, the vehicle wash facility has strong versatility to meet different types of cars. The user directly exits from the exit passage after washing, which is quick and convenient. The entire vehicle wash facility has a compact and small structure. The convenience of users is considered, and the spatial layout structure of the vehicle wash facility is fully used, so that the cost is relatively economical, and a better user experience can be achieved.

The technical features of the embodiments described above can be arbitrarily combined. In order to make the description simple, not all the possible combinations of the technical features in the above embodiments are completely described. However, all of the combinations of these technical features should be considered as within the scope described in this specification as long as there is no contradiction in the combinations of these technical features.

The above embodiments merely illustrate several implementations of the present application, and the description thereof is specific and detailed, but they are not constructed as limiting the patent scope of the present application. It should be noted that a number of variations and improvements made by those of ordinary skill in the art without departing from the conception of the present application are within the protection scope of the present application. Therefore, the patent protection scope of the present application should be subject to the appended claims.

## Claims

1. A vehicle wash facility adaptable to an underground garage, comprising a body built based on a plurality of straight parking spots adjacent to each other in the underground garage, wherein a washing space is provided in the body, the washing space being defined by an entrance barrier, an exit barrier, and two partitions for connecting the entrance barrier to the exit barrier, two tracks being fixedly mounted in the body, the two tracks being arranged obliquely and arranged parallel to each other, and being configured for a movement of a washing machine, a vehicle being configured to be park on a platform between the two tracks, and an acute angle formed between each of the two tracks and a carriageway at each of an entrance and an exit of the washing space being from 60 degrees to 90 degrees.

2. The vehicle wash facility according to claim 1, wherein the two partitions are arranged obliquely and arranged parallel to each other, and the entrance barrier and the exit barrier are arranged obliquely and arranged parallel to each other, to present a parallelogram cross section of the washing space.

3. The vehicle wash facility according to claim 1, wherein each of the two tracks is located on a ground between the two partitions, or is fixed on a respective one of the two partitions, or is hoisted on a top portion of the washing space between the two partitions, and wherein the acute angle formed between each of the two tracks and the carriageway at each of the entrance and the exit of the washing space is from 70 degrees to 80 degrees.

4. The vehicle wash facility according to any one of claims 1 to 3, wherein the washing space is obliquely arranged in a diagonal direction of the body, the body being a cuboid built based on the straight parking spots arranged in a 3 × 2 array, and each of four corners of the body being located at a respective one of four supporting pillars.

5. The vehicle wash facility according to claim 4, wherein the body comprises a front external facade, a rear external facade, a left external facade and a right external facade, the entrance barrier of the washing space facing the front external facade, the exit barrier of the washing space facing the rear external facade, wherein at least one storage room is defined by the two partitions, the front external facade, the rear external facade, the left external facade and the right external facade.

6. The vehicle wash facility according to claim 1, wherein the body further comprises at least one of an entrance passage configured for guiding the vehicle into the washing space and an exit passage configured for guiding the vehicle out of the washing space.

7. The vehicle wash facility according to claim 6, wherein a depth of the entrance passage is from 2 meters to 3 meters, a depth of the exit passage is from 0 to 1 meter, and at least one of the entrance passage and the exit passage is an open space or is formed by solid physical surfaces.

8. The vehicle wash facility according to claim 7, wherein the entrance passage is provided with two solid internal facades extending toward an entrance door,
wherein one of the two internal facades by which the vehicle first passes when travelling along the carriageway of the underground garage is an inclined flat surface, and an angle formed between the inclined flat surface and a first opening of the body being less than 90 degrees; or
wherein one of the two internal facades by which the vehicle first passes when travelling along the carriageway of the underground garage is a curved surface, if said one of the two internal facades is a curved surface, an angle formed between a tangent plane of the curved surface and a first opening of the body being less than 90 degrees.

9. The vehicle wash facility according to any one of claims 1 to 3, wherein two elongated limit levers parallel to each other are fixed on the ground between the two tracks, or limit marking lines or limit marking planes are drawn on the ground between the two tracks.

10. The vehicle wash facility according to claim 1 or 2, wherein each of the two partitions is made of a waterproof sealing material and comprises one or more of a solid wall, a waterproof wooden board, a waterproof plastic board, a waterproof glass board or combinations thereof, a distance between the two tracks being from 2.2 meters to 3.8 meters, the entrance barrier being an electric rolling shutter or an electric barrier gate.

11. The vehicle wash facility according to claim 6 or 7, wherein the entrance passage is provided with a first opening facing the carriageway of the underground garage, the entrance passage being gradually narrowed from the first opening of the body to an entrance door, and wherein the exit passage is provided with a second opening facing the carriageway of the underground garage, the exit passage being gradually widened from an exit door to the second opening of the body.
